# EUROPEAN PATENT APPLICATION

(11) **EP 3 712 053 A1**
(43) Date of publication of application: **23.09.2020**
(21) Application number: 20164344.2
(22) Date of filing: 19.03.2020
(51) Int. Cl.: B64C 1/14, B64D 11/00

(54) **OPTICALLY ENHANCED AIRCRAFT WINDOW**

(30) Priority: 22.03.2019 US 201962822607 P
(71) Applicant: Bombardier Inc., Dorval QC H4S1Y9 (CA)
(72) Inventor: CHIRIAC, Horatiu Daniel, Montreal, Quebec H4B 1S5 (CA)
(74) Representative: HGF

(57) **Abstract**

A window includes a first transparent pane having a first surface and a second surface and a second transparent pane having a third surface and a fourth surface. The third surface faces the second surface and is separated from the first transparent pane by a distance. The window also includes an optical enhancer positioned at least one of between the second surface and the third surface, or adjacent to the fourth surface. The first transparent pane transmits light therethrough as a first image with a first image area. The optical enhancer receives the first image, modifies the first image, and produces a second image with a second image area larger than the first image area.

## Description

### Field of the Invention

The present invention concerns a construction for an aircraft window that includes an optical enhancer. The optical enhancer may be incorporated into or attached to the window to create a larger, apparent window.

### Description of the Related Art

When designing an aircraft cabin, aircraft designers address a number of comfort issues for passengers including, among them, the view afforded to passengers of the exterior environment from the aircraft cabin.

Constraints on the size and shape of the windows in the aircraft present challenges to aircraft designers seeking to improve comfort by providing a larger, apparent window and to provide more light to the interior of the aircraft.

The prior art fails to provide solutions for providing larger windows.

### Summary of the Invention

The present invention seeks to address one or more of the deficiencies associated with the prior art.

In one embodiment, the present invention provides a window that includes a first transparent pane having a first surface and a second surface and a second transparent pane having a third surface and a fourth surface. The third surface faces the second surface and is separated from the first transparent pane by a distance. The window also includes an optical enhancer positioned at least one of between the second surface and the third surface, or adjacent to the fourth surface. The first transparent pane transmits light therethrough as a first image with a first image area. The optical enhancer receives the first image, modifies the first image, and produces a second image with a second image area larger than the first image area.

It is contemplated that the window also may include an intermediate region with a surface extending from the first transparent pane to the second transparent pane. If so, the optical enhancer may be disposed on the surface of the intermediate region at a position along the distance between the first transparent pane and the second transparent pane.

Still further, the surface of the intermediate region may include a groove in which the optical enhancer is disposed.

In another contemplated embodiment, the optical enhancer may be connected to the surface of the intermediate region by a fastener. Where a fastener is employed, that fastener may be an adhesive.

It is also contemplated that the optical enhancer may be disposed adjacent to the second surface. If so, the optical enhancer may be attached to the second surface via an adhesive.

In still another contemplated embodiment, the optical enhancer may be disposed adjacent to the third surface. Here, it is contemplated that the optical enhancer may be attached to the third surface via an adhesive.

In a further embodiment, it is contemplated that the optical enhancer may be disposed adjacent to the fourth surface. If so, the optical enhancer may be attached to the fourth surface via an adhesive.

It is also contemplated that the optical enhancer may be integrally formed with the first transparent pane. Specifically, the optical enhancer may be integrally formed with the second surface.

Alternatively, the optical enhancer may be integrally formed with the second transparent pane. If so, the optical enhancer may be integrally formed with the third surface.

In still another variation, the optical enhancer may be integrally formed with the fourth surface. Here, the optical enhancer may be micro-etched to produce the second image.

Alternatively, the optical enhancer may include at least two materials to produce the second image.

The optical enhancer may be a laminate.

The window is contemplated to be an aircraft window.

Still further aspects of the present invention will be made apparent from the drawings and the discussion provided below.

### Brief Description of the Drawings

The drawings illustrate various, non-limiting embodiments of the present invention, in which:
Fig. 1 is a graphical depiction of two conventional aircraft windows, side-by-side, taken from the perspective of a passenger within the aircraft;
Fig. 2 is a partial, cross-section of an aircraft window according to the prior art;
Fig. 3 is a graphical representation of the optical performance of the prior art aircraft window illustrated in Fig. 2;
Fig. 4 is a graphical representation of the optical performance of the aircraft window according to the present invention;
Fig. 5 is a graphical depiction of two aircraft windows from the perspective of a passenger within the aircraft, providing an illustration of the aircraft window according to the present invention;
Fig. 6 is a partial, cross-section of a first embodiment of an aircraft window according to the present invention;
Fig. 7 is a partial, cross-section of a second embodiment of an aircraft window according to the present invention;
Fig. 8 is a partial, cross-section of a third embodiment of an aircraft window according to the present invention; and
Fig. 9 is a partial, cross-section of a fourth embodiment of an aircraft window according to the present invention.

### Description of Embodiments of the Invention

The present invention will now be described in connection with one or more embodiments. The discussion of specific embodiments is intended to highlight the breadth and scope of the present invention without limiting the invention thereto. Those skilled in the art should appreciate that the present invention may be implemented via one or more equivalents and variations of the embodiments described herein. Those equivalents and variations are intended to be encompassed by the present invention.

In the paragraphs that follow, the present invention is described in connection with its deployment in an aircraft. While the window of the present invention is discussed in connection with an aircraft cabin, the present invention may be employed in other environments including, but not limited to, trains, cars, boats, etc.

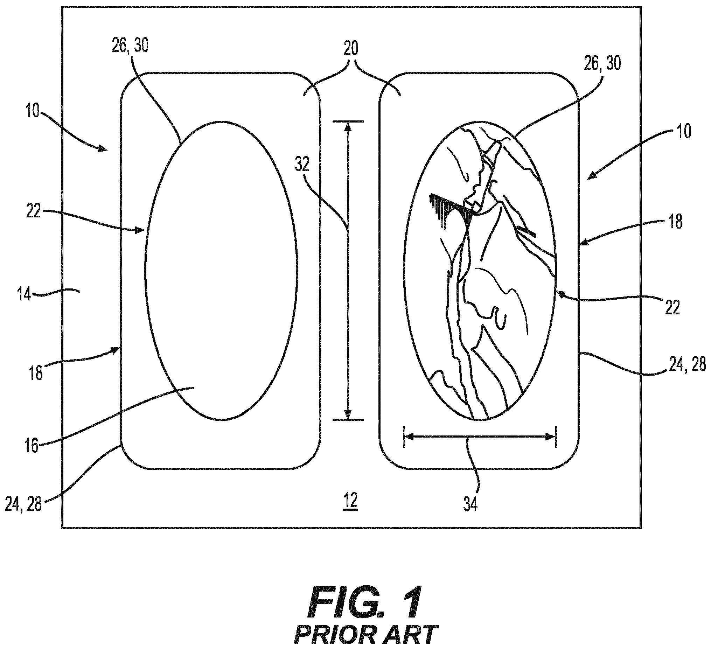

Fig. 1 is a graphical illustration of two aircraft windows 10 in a side-by-side configuration typical for an aircraft cabin 12. The windows 10 are installed in the wall 14 of the aircraft cabin 12, permitting the passengers to view the external environment 16.

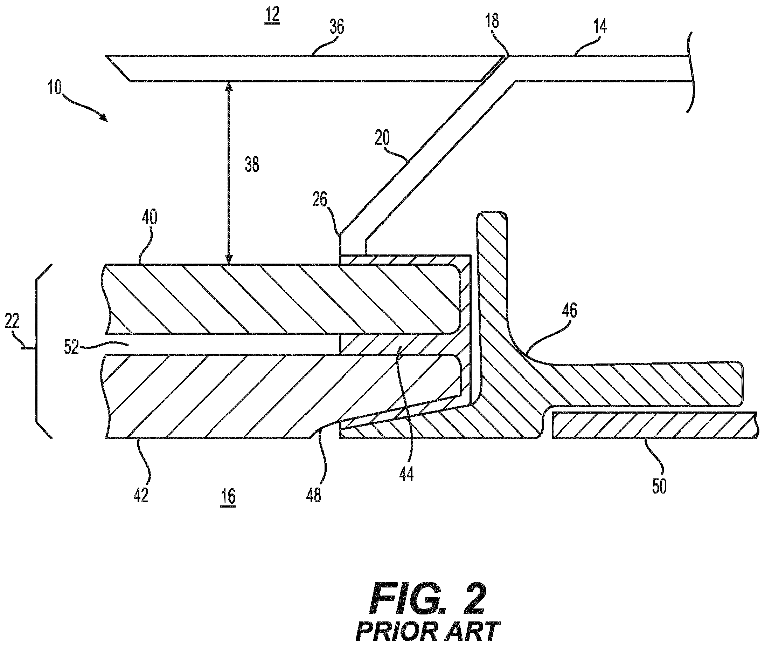

Each window 10 is surrounded by a frame 18, which is an integral part of the wall 14. As highlighted in Fig. 2, the frame 18 defines a transition point from the wall 14 to an intermediate region 20 extending from the wall 14 to the transparent pane 22. The frame 18 defines a frame opening 24 in the wall 14 that narrows down to a transparent pane opening 26. In this example, the frame 18 and the frame opening 24 are rectangularly-shaped with rounded corners.

As should be apparent to those skilled in the art and as shown in Fig. 2, the intermediate region 20 between the frame opening 24 and the transparent pane opening 26 tapers from the wall 14 to the transparent pane 22. As should be apparent, the intermediate region 20 forms an oblong cone around the transparent pane 22, extending to the transparent pane 22 from the wall 14.

As also illustrated in Fig. 1, the frame 18 circumscribes a frame area 28. The frame 18, therefore, defines the perimeter around the frame area 28. Similarly, the transparent pane opening 26 circumscribes a transparent pane area 30. As with the frame 18, the transparent pane opening 26 defines the perimeter around the pane area 30. As is apparent, the frame area 28 is larger than the transparent pane area 30.

In Fig. 1, the frame opening 24 has a generally square configuration. The transparent pane opening 26 has a generally oval shape. In the illustrated embodiment, the transparent pane opening 26 has a height 32 and a width 34. As should be apparent from Fig. 2, the height 32 and width 34 of the transparent pane opening are the same as or nearly the same as the opening in the fuselage 38 that accommodates the transparent pane 22.

Fig. 2 illustrates one construction of part of the window 10 according to the prior art. The window 10 encompasses two basic elements: (1) the transparent pane 22 that separates the
aircraft cabin 14 from the external environment 16 and (2) a cabin pane 36. Among other things, the cabin pane 36 prevents a passenger from touching the transparent pane 22. The cabin pane 36 is separated from the transparent pane 22 by a distance 38.

For the window 10, the transparent pane 22 encompasses an inner pane 40 and an outer pane 42. It is noted that the terms "inner" and "outer" have been selected with reference to the aircraft cabin 12 and the external environment 16. An "inner"-facing element is one that faces the interior of the aircraft, specifically the aircraft cabin 12. An "outer"-facing element faces the exterior of the aircraft, specifically the external environment 16.

The outer pane 42 separates the external environment 16 from the aircraft cabin 12. The inner pane 40 also separates the external environment 16 from the aircraft cabin 12. The inner pane 40 acts as a redundant barrier between the external environment 16 and the aircraft cabin 12.

The inner pane 40 and the outer pane 44 are edged by a seal 44 that is made from rubber. The seal 44 is disposed on a frame element 46 that is made from an aluminum material. The outer pane 44 includes a beveled edge 48, which conforms to the frame element 46. The frame element 46 connects to the fuselage 50.

In the illustrated embodiment, the inner pane 40 is separated from the outer pane 42 by a gap 52. The gap 52 is contemplated to contain air.

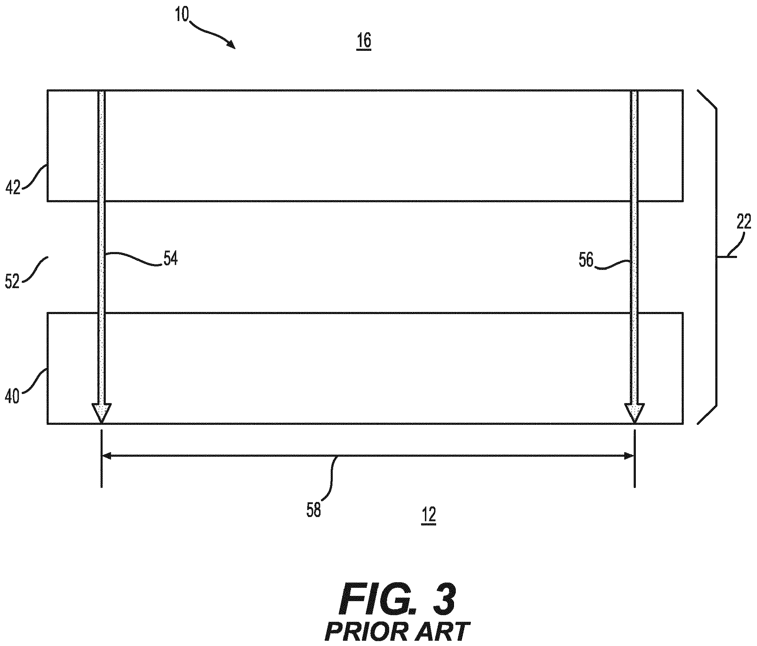

Fig. 3 is a graphical representation that depicts the optical performance of the window 10.

Light, designated as light rays 54, 56, enters into the transparent pane 22 from the external environment 16. The light rays 54, 56 are transmitted through the outer pane 42, enter into and pass through the air gap 52, and then are transmitted through the inner pane 40 into the aircraft cabin 12. While those skilled in the art will appreciate that the travel path of the light rays 54, 56 from the exterior environment 16 into the aircraft cabin 12 does not follow an unwavering straight line, the path of the light rays 52, 54 though the transparent pane 22 has been simplified to streamline the discussion of the present invention.

With respect to the window 10, the light rays 54, 56 are illustrated as being separated from one another by a first distance 58. The first distance 58 may correspond either to the height 32 or to the width 34 designated in Fig. 1.

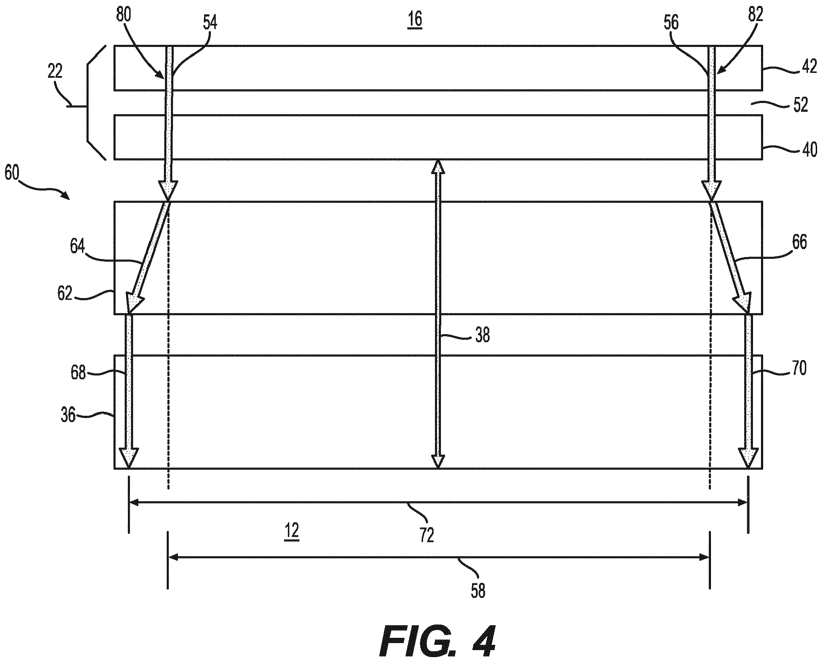

Fig. 4 illustrates the basic construction of a window 60 according to the present invention. The window 60 includes the transparent pane 22 and the cabin pane 36, just as illustrated in connection with the window 10. It is noted that the transparent pane 22 and the cabin pane 36 may differ from the construction discussed in connection with the window 10 without departing from the scope of the present invention.

In at least one respect, the window 60 differs from the prior art window 10 in that the window 60 includes an optical enhancer 62 disposed between the transparent pane 22 and the cabin pane 36 in the space defined by the distance 38. The optical enhancer 62 enlarges the size of the image perceived by passengers in the aircraft cabin 12 by enlarging the passengers' view of the external environment 16. Specifically, the optical enhancer 62 creates a virtual image within the aircraft cabin 12 that has a size greater than the image transmitted through the transparent pane 22. As a result, passengers within the aircraft cabin 12 perceive that the window 60 is larger than the window 10 when, in fact, the physical size of the transparent pane 22 is the same for both the window 10 and the window 60.

The optical enhancer 62 is an optical element that alters the transmission of the light rays 54, 56 by altering them as indicated by the light rays 64, 66. The paths of the light rays 54, 56 may be altered by refraction, for example. The altered light rays 64, 66 are then transmitted through the cabin pane 36 as indicated by the light rays 68, 70. This results in an image measurable across a second distance 72. As noted, the second distance 72 is larger than the first distance 58.

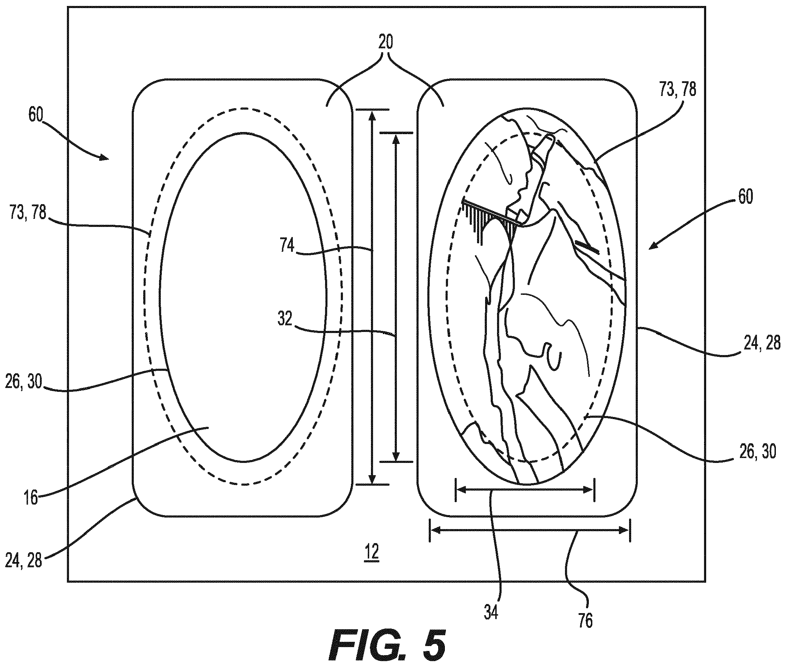

Fig. 5 is a graphical representation of two windows 60 disposed, side-by-side, in an aircraft. Fig. 5 parallels Fig. 1 and highlights the difference between the window 60 of the present invention and the window 10 of the prior art.

As shown in Fig. 5, the transparent pane opening 26 is smaller than a virtual image perimeter 73, which circumscribes the modified image transmitted through the optical enhancer 62. Similar to the transparent pane opening 26, the virtual image perimeter 73 has a virtual height 74 and a virtual width 76. With reference to the two-dimensional representation in Fig. 4, the second distance 72 may be either the virtual height 74 and/or the virtual width 76. For completeness, the virtual image perimeter 73 circumscribes a virtual image area 78. The virtual image area 78 is larger than the transparent pane area 30.

As should be apparent, the transparent pane area 30 is consistent with an unmodified image area transmitted through the transparent pane 22. Consistent with the discussion herein, the unmodified image area 30 is smaller than the virtual image area 78.

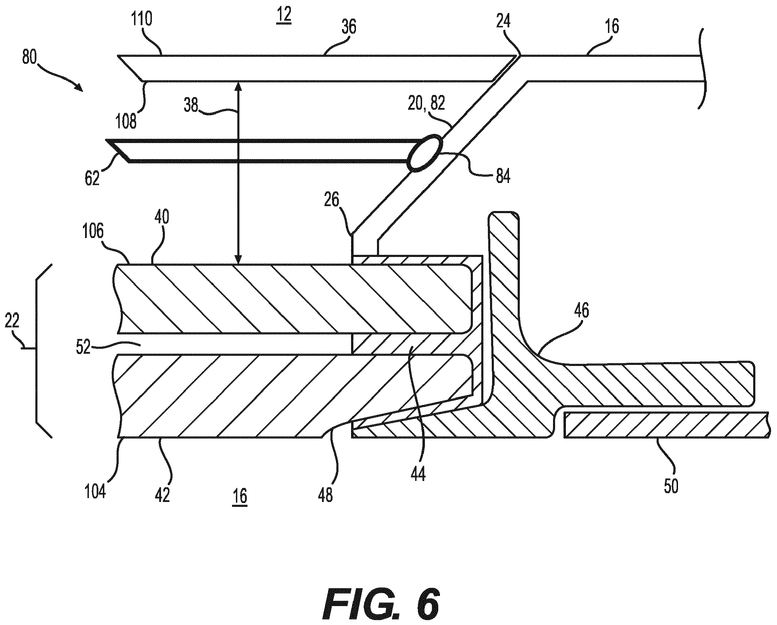

Fig. 6 provides a partial, cross-section of a first embodiment of a window 80 according to the present invention that incorporates the optical enhancer 62 at a position between the transparent pane 22 and the cabin pane 36. In this embodiment, the optical enhancer 62 is attached to surface 82 of the intermediate region 20 via an adhesive 84. As should be apparent to those skilled in the art, however, the optical enhancer 62 may be attached to the surface 82 via any other suitable connection. For example, the surface 82 may be provided with a groove that accommodates the optical enhancer 62. In another contemplated embodiment, the optical enhancer 62 may be connected to the intermediate region 20 via ultrasonic welding, an interference fit, fasteners, etc., as should be apparent to those skilled in the art.

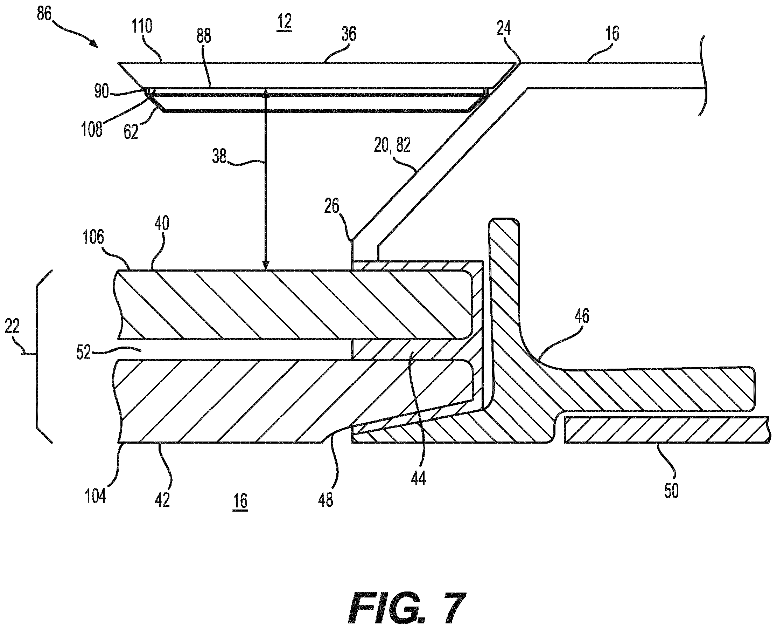

Fig. 7 provides a partial, cross-section of a second embodiment of a window 86 according to the present invention. In this embodiment, the optical enhancer 62 is connected to the outer surface 88 of the cabin pane 36 via an adhesive 90. As should be apparent to those skilled in the art, however, the optical enhancer 62 may be attached to the outer surface 88 via any other suitable connection without departing from the scope of the present invention. Alternatively, it is contemplated that the optical enhancer 62 may be formed as an integral component of the cabin pane 36.

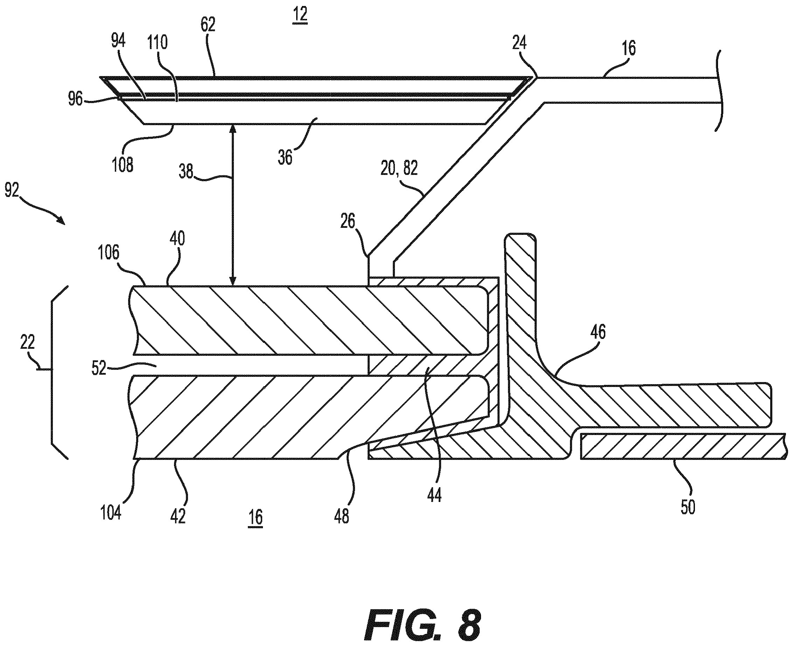

Fig. 8 provides a partial, cross-section of a second embodiment of a window 86 according to the present invention. In this embodiment, the optical enhancer 62 is connected to the inner surface 94 of the cabin pane 36 via an adhesive 96. As should be apparent to those skilled in the art, however, the optical enhancer 62 may be attached to the inner surface 94 via any other suitable connection without departing from the scope of the present invention. Alternatively, it is contemplated that the optical enhancer 62 may be formed as an integral component of the cabin pane 36.

For the window 86, it is noted that the cabin pane 36 is inset from the frame opening 24 to accommodate the thickness of the optical enhancer 62 and the adhesive 96. This construction is not required to practice the present invention, as should be apparent to those skilled in the art.

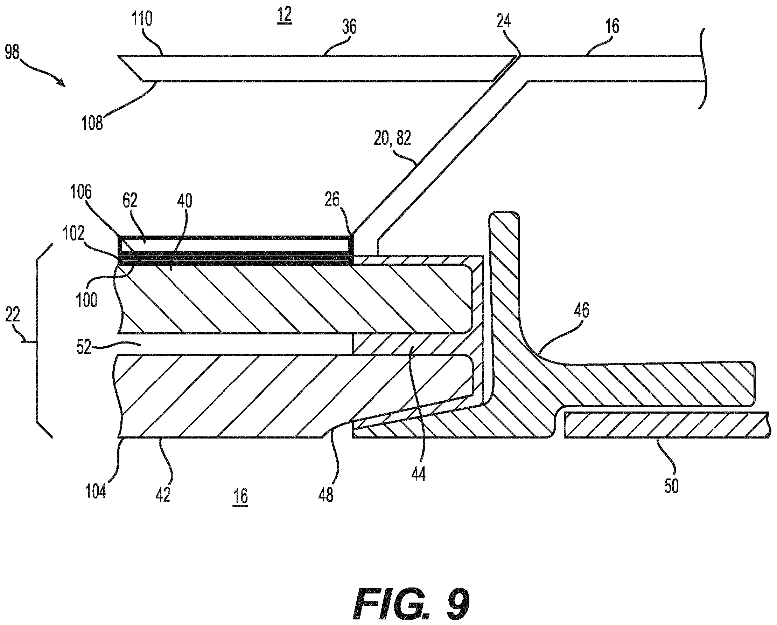

Fig. 9 provides a partial, cross-section of a second embodiment of a window 98 according to the present invention. In this embodiment, the optical enhancer 62 is connected to the inner surface 100 of the transparent pane 22 via an adhesive 102. As should be apparent to those skilled in the art, however, the optical enhancer 62 may be attached to the inner surface 100 via any other suitable connection without departing from the scope of the present invention. Alternatively, it is contemplated that the optical enhancer 62 may be formed as an integral component of the transparent pane 22.

With renewed reference to Figs. 4 and 5, the optical enhancer 62 is contemplated to be positioned in relation to the transparent pane 22 so that the virtual image area 78 is larger than the transparent pane area 30. As such, the virtual image perimeter 73 is contemplated to surround (*i.e.*, lie outside of) the transparent pane opening 26. And, with reference to the first distance 58 and the second distance 72, the second distance 72 is larger than the first distance 58. Thus, a passenger within the aircraft cabin 12 will perceive that the window 60 has a larger opening size, because the virtual image area 78 is larger than the transparent pane area 30.

The optical enhancer 62 is contemplated to encompass any of a wide variety of optical devices capable of altering light transmission therethrough so that a larger image is produced thereby. The optical enhancer 62 may be a lens, for example. The lens may incorporate a structure that produces an enlarged image of the external environment 18. More specifically, the optical enhancer 62 is contemplated incorporate micro-etchings on one or both surfaces that are designed to produce a virtual image having the virtual image area 78.

It is also contemplated that the optical enhancer 62 may occupy as small a thickness as practicable. Not only is this desirable from a visual standpoint, but it is the object of aircraft designers to add as little weight to an aircraft as possible. As a result, thinner, lighter components are always preferred, where possible. It is contemplated that the optical enhancer 62 will follow these design guidelines as well.

Here, the optical enhancer 62 may be a thin sheet or film that is positioned in relation to the transparent pane 22. While it is contemplated that the optical enhancer 62 will be made from a suitable plastic, polycarbonate, or other polymeric compound, the present invention should not be understood to be limited solely to these materials. To the contrary, the optical enhancer 62 may be constructed from glass, crystal, transparent oxides, and the like without departing from the scope of the present invention. Still further, the optical enhancer 62 may be a composite material.

Still further, it is contemplated that the optical enhancer 62 will be made from a single material. However, the optical enhancer 62 may be made from a combination of several materials without departing from the scope of the present invention. For example, if the optical enhancer 62 is constructed as a composite material, it is contemplated that the optical enhancer 62 may be made of a number of layers of different materials that are laminated together. Still further, it is contemplated that the optical enhancer 62 may comprise multiple layers that are not laminated together but are stacked atop one another.

As should be apparent from Figs. 6, 7, and 9, it is contemplated that the optical enhancer 62 may be positioned at any location along the distance 38 between the inner surface 100 of the transparent pane 22 and the outer surface 88 of the cabin pane 36. And, as shown in Fig. 8, it is also contemplated that the optical enhancer 62 may be affixed to the inner surface 94 of the cabin pane 36.

It is believed that the embodiments 6, 7, and 9 are likely to be the most desirable of the embodiments described herein for the simple reason that it may be prudent to separate the optical enhancer 62 from passengers. Specifically, it is possible that the optical enhancer 62 may be damaged (*e.g*., by scratching) by a passenger during the operational lifetime of the aircraft. Therefore, to prevent damage to the optical enhancer 62, it is likely that the optical enhancer 62 will be positioned between the transparent pane 22 and the cabin pane 36. And, for simplicity, it is contemplated that the optical enhancer 62 will be disposed at a point along the distance 38 between the transparent pane 22 and the cabin pane 36, as shown in Fig. 6.

With renewed reference to Figs. 6-9, the following additional definitions are provided. The transparent pane 22 has a first surface 104 and a second surface 106. The first surface 104 faces the external environment 16. The second surface 106 faces the aircraft cabin 12. The cabin pane 36, which also is transparent, has a third surface 108 and a fourth surface 110. The third surface 108 faces the external environment 16 and the second surface 106 of the transparent pane 22. The fourth surface 110 faces the aircraft cabin 12. The fourth surface 110 may be touched by the passengers in the aircraft cabin 12.

As discussed, the optical enhancer 62 is contemplated to be an element that is separate from the transparent pane 22 and the cabin pane 36. However, as noted, the optical enhancer 62 may be integrally formed as a part of the transparent pane 22 and/or the cabin pane 36. If the optical enhancer 62 is formed as a part of the transparent pane 22, it is contemplated that the optical enhancer 62 will be integrally formed as a part of the second surface 106, such as by micro-etching of the second surface. If the optical enhancer 62 is formed as a part of the cabin pane 36, the optical enhancer is contemplated to be integrally formed as a part of the third and/or fourth surfaces 108, 110, also by microetching. Still further, the optical enhancer 62 may be incorporated as a part of the transparent pane 22 and/or the cabin pane 36 as required or desired.

As indicated above, the present invention may be implemented in any of a number of configurations without departing from the scope thereof. Any and all equivalents and variations that should be apparent to those skilled in the art are intended to be encompassed by the present invention.

## Claims

1. A window (60), comprising:
a first transparent pane (22) having a first surface (104) and a second surface (106);
a second transparent pane (36) having a third surface (108) and a fourth surface (110), wherein the third surface (108) faces the second surface (106) and is separated from the first transparent pane (22) by a distance; and
an optical enhancer (62) positioned at least one of
between the second surface (106) and the third surface (108), or
adjacent to the fourth surface (110);
wherein the first transparent pane (22) transmits light therethrough as a first image with a first image area, and
wherein the optical enhancer (62) receives the first image, modifies the first image, and produces a second image with a second image area larger than the first image area.

2. The window (60) of claim 1, further comprising:
an intermediate region (20) with a surface extending from the first transparent pane (22) to the second transparent pane (36),
wherein the optical enhancer (62) is disposed on the surface of the intermediate region (20) at a position along the distance between the first transparent pane (22) and the second transparent pane (36).

3. The window (60) of claim 2, wherein the surface of the intermediate region (20) includes a groove in which the optical enhancer (62) is disposed.

4. The window (60) of claim 2, wherein the optical enhancer (62) is connected to the surface of the intermediate region (20) by a fastener.

5. The window (60) of claim 4, wherein the fastener is an adhesive (84).

6. The window (60) of claim 1, wherein the optical enhancer (62) is disposed adjacent to the second surface (106).

7. The window (60) of claim 6, wherein the optical enhancer (62) is attached to the second surface (106) via an adhesive.

8. The window (60) of claim 1, wherein the optical enhancer (62) is disposed adjacent to the third surface (108).

9. The window (60) of claim 8, wherein the optical enhancer (62) is attached to the third surface (108) via an adhesive.

10. The window (60) of claim 1, wherein the optical enhancer (62) is disposed adjacent to the fourth surface (110).

11. The window (60) of claim 10, wherein the optical enhancer (62) is attached to the fourth surface (110) via an adhesive.

12. The window (60) of claim 1, wherein the optical enhancer (62) is integrally formed with the first transparent pane (22).

13. The window (60) of clam 12, wherein the optical enhancer (62) is integrally formed with the second surface (106).

14. The window (60) of claim 1, wherein the optical enhancer (62) is integrally formed with the second transparent pane (36).

15. The window (60) of claim 14, wherein the optical enhancer (62) is integrally formed with the third surface (108).
